# EUROPEAN PATENT APPLICATION

(11) **EP 2 592 796 A1**
(43) Date of publication of application: **15.05.2013**
(21) Application number: 11816012.6
(22) Date of filing: 28.02.2011
(51) Int. Cl.: H04L 12/58

(54) **SYSTEM AND METHOD FOR MULTIPLE ACCOUNTS TO ACCESS INTERNET MESSAGE ACCESS PROTOCOL SERVER**

(30) Priority: 10.08.2010 CN 201010252655
(71) Applicant: ZTE Corporation, Shenzhen, Guangdong 518057 (CN)
(72) Inventor: LU, Yan, Shenzhen Guangdong 518057 (CN)
(74) Representative: Lampis, Marco
(86) International application number: PCT/CN2011/071384
(87) International publication number: WO 2012/019453

(57) **Abstract**

A method and system for multiple accounts accessing an Internet Message Access Protocol (IMAP) server are provided by the present invention. The method includes: an IMAP client establishing a single IMAP link between the IMAP client and the IMAP server for multiple accounts of one user; and when logging in the IMAP server, the IMAP client sending a login request to the IMAP server based on the IMAP link, and the IMAP server completing verification of the multiple accounts after receiving the login request. In the present invention, it can be implemented that the user uses the multiple accounts (i.e. mail boxes) to access the IMAP server simultaneously, thereby improving the user experience.

## Description

### Technical Field

The present invention relates to the field of mobile communication technology, and especially, to a system and method for multiple accounts accessing an Internet Message Access Protocol (IMAP) server.

### Background of the Related Art

Nowadays, an IMAP protocol is adopted to support a function of mobile-phone mailbox in more and more mobile phones. One user may apply for multiple mailbox addresses (i.e. accounts), but the IMAP protocol does not support the multi-account parallel processing currently, that is, if the user has applied for multiple accounts, it is required to log in respectively with respect to each mailbox, that is, it is used separately. The present invention puts forward several kinds of solutions, which enables the user to perform parallel access to his/her own mailboxes simultaneously, thereby improving the user experience.

Typically, when an IMAP client accesses an IMAP server (referring to a command interaction process between the IMAP client and the IMAP server), it is required to log in the IMAP server, and after the login is passed, the client can send a specific information folder operation command, and send a fetch for obtaining message (or called as mail) information of the current folder. Here, the folder refers to folder information of folders or boxes belonging to the user in the IMAP server.

The IMAP is a connection-oriented and state-oriented protocol, since the protocol does not support multiple accounts at present, after the user uses one account to log in, all possible operations during the IMAP client accessing the IMAP server aim at the operations under this account, such as login, folder maintenance, selection operation and mail acquisition operation and so on.

### Summary of the Invention

The main object of the present invention is to provide a system and method for multiple accounts accessing an Internet Message Access Protocol (IMAP) server, to solve the problem of repeated login when a user with multiple accounts accesses a storage server.

In order to solve the above technical problem, the present invention provides a method for multiple accounts accessing an Internet Message Access Protocol (IMAP) server, which comprises:
an IMAP client establishing a single IMAP link between the IMAP client and the IMAP server for multiple accounts of a user; and
when logging in the IMAP server, the IMAP client sending a login request to the IMAP server based on the IMAP link, and the IMAP server completing verification of the multiple accounts after receiving the login request.

Preferably, the above method further comprises:
before the IMAP client logs in the IMAP server, establishing association information containing account information of the associated multiple accounts belonging to the user; and the multiple accounts contained in the association information forming an association group;
the step of sending a login request to the IMAP server based on the IMAP link comprising: the IMAP client sending the login request to the IMAP server by using a logged-in account in the association group so as to perform login, and the login request carrying account information of the logged-in account; and
the step of the IMAP server completing verification of the multiple accounts after receiving the login request comprising: after completing the verification of the logged-in account, the IMAP server searching for association information according to the logged-in account, and completing verifications of other associated accounts in searched-out association information; wherein,
the logged-in account is any account in the association group or one specific account in the association group.

Preferably, the login request sent by the IMAP client to the IMAP server carries the account information of the multiple accounts; and the step of the IMAP server completing verification of the multiple accounts after receiving the login request comprises: the IMAP server performing verification on the multiple accounts.

Preferably, the above method further comprises:
after using the multiple accounts to log in the IMAP server, when it is required to perform operation on one account, the IMAP client sending an account selection command to the IMAP server, and carrying account information of an account on which the operation is required to be performed in the account selection command, and the IMAP server returning an account selection response after receiving the account selection command, and afterwards, the IMAP client performing operation on a selected account.

In order to solve the above technical problem, the present invention further provides a method for multiple accounts accessing an Internet Message Access Protocol (IMAP) server, which comprises:
establishing a single IMAP link for each of the multiple accounts between IMAP Client and the IMAP server respectively; and each account corresponding to one IMAP link;
when logging in the IMAP server, an IMAP client sending a login request to the IMAP server via each of the multiple IMAP links simultaneously, and a login request in each link carrying information of account; and
the IMAP server receiving the login requests from the multiple links, and completing verification of the multiple accounts.

Preferably, the above method further comprises:
before the IMAP client logs in the IMAP server, setting an association table for the user, the association table recording a corresponding relation between the user and the multiple accounts, and setting a login password for the multiple accounts;
when sending the login requests to the IMAP server in the multiple IMAP links, the IMAP client inputting the login password once, and the login password being sent to the IMAP server along with account information sent via each IMAP link.

In order to solve the above technical problem, the present invention further provides a system for multiple accounts accessing an Internet Message Access Protocol (IMAP) server, which comprises an IMAP client and the IMAP server, wherein:
the IMAP client is configured to: establish a single IMAP link for multiple accounts of one user along with the IMAP server; and send a login request to the IMAP server based on the established single IMAP link;
the IMAP server is configured to complete verification of the multiple accounts after receiving the login request.

Preferably, the above system further comprises a setting module, and the setting module is configured to establish association information containing account information of the associated multiple accounts belonging to the user; and the multiple accounts contained in the association information form an association group;
the IMAP client is configured to send the login request to the IMAP server in the following way: sending the login request to the IMAP server by using a logged-in account in the association group, and carrying information of the logged-in account;
the IMAP server is configured to complete the verification of the multiple accounts in the following way: completing verification of the logged-in account according to account information in the login request, and searching for association information according to the logged-in account, and completing verifications of other associated accounts; wherein,
the logged-in account is any account in the association group or one specific account in the association group.

Preferably, the login request sent by the IMAP client to the IMAP server carries the account information of the multiple accounts;
the IMAP server is configured to complete the verification of the multiple accounts in the following way: performing verification on the multiple accounts after receiving the login request.

Preferably, the IMAP client is further configured to send an account selection command to the IMAP server when it is required to perform operation on one account after using the multiple accounts to log in the IMAP server, and to carry account information of an account on which the operation is required to be performed in the account selection command, and perform operation on a selected account after receiving an account selection response;
the IMAP server is further configured to return the account selection response after receiving the account selection command.

In order to solve the above technical problem, the present invention further provides a system for multiple accounts accessing an Internet Message Access Protocol (IMAP) server, which comprises an IMAP client and the IMAP server, wherein:
the IMAP client is configured to establish a single IMAP link for each of multiple accounts of one user along with the IMAP server, wherein each account corresponds to one IMAP link;
the IMAP client is further configured to send a login request to the IMAP server via each of the multiple IMAP links simultaneously when logging in the IMAP server, wherein a login request in each IMAP link carries information of account corresponding to the IMAP link;
the IMAP server is configured to receive the login requests from the multiple IMAP links, and complete verification of the multiple accounts.

Preferably, the system further comprises a setting module, and the setting module is configured to: set an association table for the user, wherein the association table records a corresponding relation between the user and the multiple accounts, and the setting module is configured to: set a login password for the multiple accounts in the association table;
the IMAP client is further configured to input the login password once when sending the login requests to the IMAP server, wherein the login password is sent to the IMAP server along with account information sent via each IMAP link.

In conclusion, the present invention provides a system and method for multiple accounts accessing the IMAP server, which can implement that the user uses multiple accounts (i.e. mail boxes) to access the IMAP server simultaneously, thereby improving the user experience.

### Brief Description of Drawings

FIG. 1 is a first kind of schematic diagram of the multi-account IMAP client accessing the IMAP server according to the example of the present invention.
FIG. 2 is a second kind of schematic diagram of the multi-account IMAP client accessing the IMAP server according to the example of the present invention.
FIG. 3 is a third kind of schematic diagram of the multi-account IMAP client accessing the IMAP server according to the example of the present invention.

### Preferred Embodiments of the Present Invention

The present invention will be described in detail with reference to the accompanying drawings and in combination with the examples below. It should be noted that the examples in the present invention and the characteristics in the examples can be combined with each other in the condition of no conflict.

### System examples

### Example 1

The example provides a system for multiple accounts accessing an Internet Message Access Protocol (IMAP) server, which comprises an IMAP client, the IMAP server and a setting module; wherein,
the IMAP client is configured to: establish a single IMAP link for multiple accounts of one user along with the IMAP server and send a login request to the IMAP server based on the IMAP link;
the IMAP server is configured to complete verification of the multiple accounts after receiving the login request.

The setting module is configured to establish association information containing account information of the associated multiple accounts belonging to one user; and all the accounts contained in the association information form an association group.

The IMAP client sending the login request to the IMAP server based on the IMAP link means: the IMAP client carrying information of a logged-in account in the association group when sending the login request to the IMAP server based on the IMAP link;
the IMAP server completing the verification of the multiple accounts after receiving the login request means: the IMAP server completing verification of the logged-in account according to the information of the logged-in account in the login request, and searching for association information according to the logged-in account, and also completing the verification of other associated accounts in the association information, wherein, the logged-in account is any account in the association group or one specific account in the association group. Or,
the IMAP client sending the login request to the IMAP server based on the IMAP link to request logging in multiple accounts of the user refers to: account information of the multiple accounts, which is requested to be logged in, being carried when the IMAP client sends the login request to the IMAP server;
the IMAP server performs verification on the multiple accounts in the login request simultaneously after receiving the login request.

The IMAP client is further configured to send an account selection command to the IMAP server when it is required to perform operation on one account after using the multiple accounts to log in the IMAP server, and to carry account information of an account required to be selected in the account selection command, and perform operation on a selected account after receiving an account selection response;
the IMAP server is further configured to return the account selection response after receiving the account selection command.

### Example 2

The example provides a system for multiple accounts accessing an Internet Message Access Protocol (IMAP) server, which comprises an IMAP client, a setting module and the IMAP server;
the IMAP client is configured to establish a single IMAP link for each of multiple accounts of one user along with the IMAP server, wherein each account corresponds to one IMAP link;
the IMAP client is further configured to send a login request to the IMAP server via each of multiple IMAP links simultaneously when logging in the IMAP server, wherein each login request carries information of a corresponding account; and
the IMAP server is configured to receive the login requests from the multiple links, and complete verification of the multiple accounts.

The setting module is configured to set an association table for the user, wherein the association table records a corresponding relation between the user and the multiple accounts of the user, and the setting module is configured to set a login password for the multiple accounts in the association table;
when logging in the IMAP server based on the multiple IMAP links, the IMAP client only inputs the login password once, wherein the login password is sent to the IMAP server along with the account information sent via each IMAP link.

### Method examples

### Example 1

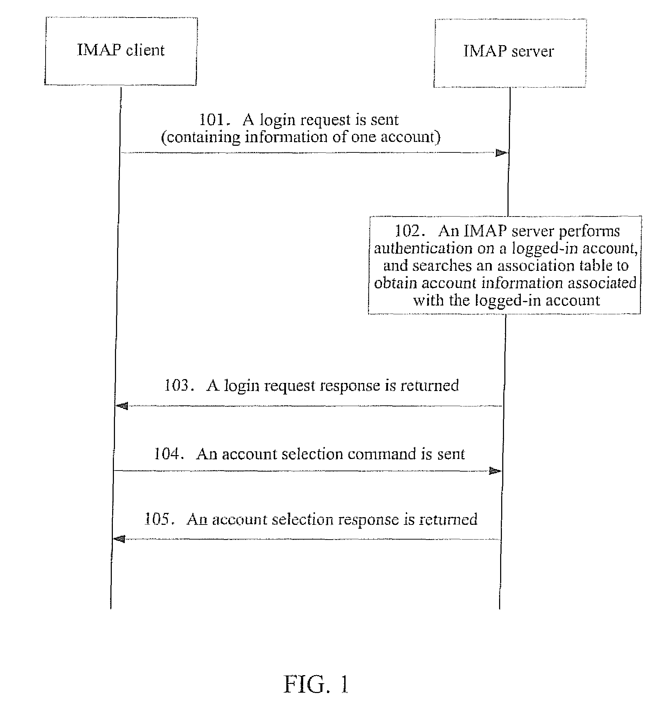

The example provides a method for multiple accounts accessing an IMAP server, and as shown in FIG. 1, and based on a preset association table in the example, it is only required to establish one IMAP link (i.e. a Transmission Control Protocol (TCP) link) between an IMAP client and the IMAP server.

An IMAP is an application layer protocol based on a TCP, firstly a client uses the existing communication technology to establish one TCP link between the client and the IMAP server, and based on the link, the time division multiplexing of accounts is performed logically, that is, within a period of time, when the IMAP client is required to perform operation on the account 1 with the IMAP server, the current working account can be firstly set as the account 1 between the client and the server (i.e. an account selection command (SELECT A command) disclosed by the present invention), and then the command operation between the client and the server based on the link is an operation on the account. Similarly, when it is required to perform operation on the account 2, the account 2 is set as the current working account.

With reference to FIG. 1, a flow diagram of steps of the IMAP client using multiple accounts to access the IMAP server according to the example of the present invention is illustrated, and the following steps can be included specifically.

Association information containing account information of multiple accounts belonging to one user is established; and all accounts contained in the association information form an association group.

The above association information is preset in the IMAP server (or in other servers). For example, one user can set associations for multiple accounts belonging to the user itself, and they can be set as one association group and also can be divided into multiple association groups. Therefore, when the user uses one account to perform login, and after the server complete verification of the account, other accounts associated with the logged-in account all can pass the verification, and the user can freely perform switching and using between these accounts afterwards.

Multiple accounts of the same user are associated in a presetting way, and the multiple accounts of the same user are grouped as one group to perform association, and the multiple accounts of the same user are divided into multiple groups to perform association, and the association information storage can be stored in the IMAP server or other servers. For example, a user has 4 accounts: A, B, C and D, and the user can set these 4 addresses in one group to perform association, and the 4 addresses all correspond to the user; and the user also can divide the 4 addresses into multiple groups such as 2 groups to perform association, for example, wherein A and B are in one group, and C and D are in the other group. The skilled person in the art can perform appropriate settings according to the actual demand, which is not limited by the present invention.

In step 101, the IMAP client sends a login request to the IMAP server, and information of an account which is requested to be logged in is carried.

If a LOGIN (clear text login command) way is used, the above login request is also required to carry passwords corresponding to the accounts. The login way is not limited by the present invention.

The IMAP client can use any account in the multiple user accounts in the association group to log in the IMAP server, that is, account information of any account in the association group is carried.

According to the existing IMAP protocol, there are three login ways: a STARTTLS (reliable TCP command) way, an AUTHENTICATE (authentication command) way and the LOGIN way.

In step 102, according to account information of a logged-in account in the login request, the IMAP server performs verification on the logged-in account, and if the verification is successful, the verifications of other accounts associated with the logged-in account (i.e. other accounts in the same association group) are also passed together.

Specifically, after verifying the logged-in account, the IMAP server obtains other accounts associated with the logged-in account by searching for the association information containing the logged-in account, and thus other accounts also pass the verification.

Now, an example is given for descriptions, the IMAP server searches for the association information of user accounts through user account A and obtains the user account B associated with the user account A. The IMAP server completes the verification of the user account A, and since the accounts B and A are correlated, the verification of the user account B is also completed.

Through the example, the problem that, when the multiple accounts of the IMAP client access the IMAP server, the user must change the accounts repeatedly and perform multiple logins to be able to access storage information of the multiple accounts in the related art, is solved effectively. By using one account of the same user to acquire other accounts associated with the account, and then by the account and any account in other accounts associated with the account accessing the IMAP server, the IMAP server searches and acquires other accounts associated with the logged-in account, thereby implementing that the user uses one account to log in and is able to access the storage information of the multiple accounts in the IMAP server, which enhances the access efficiency of system and improves the user experience.

In step 103, the IMAP server returns a login request response to the IMAP client.

At this point, the IMAP client logs in all accounts in the same association group simultaneously.

In step 104, when it is required to perform operation on one of the multiple accounts, the IMAP client sends an account selection command to the IMAP server, and the account selection command carries information of the account on which operation is performed, for example, SELECT A is sent, and the A means that it is chosen to perform operation on the account A.

In step 105, the IMAP server returns an account selection response to the IMAP client, and then the operation of the IMAP client is performed on the selected account.

Therefore, the IMAP client can implement the selection and handover between multiple accounts by extending the account selection command.

The present invention discloses that, after the extension of the account selection command SELECTA can implement the login of the IMAP client, selection operations are performed between all the accounts, thereby determining which account is the current account.

### Example 2

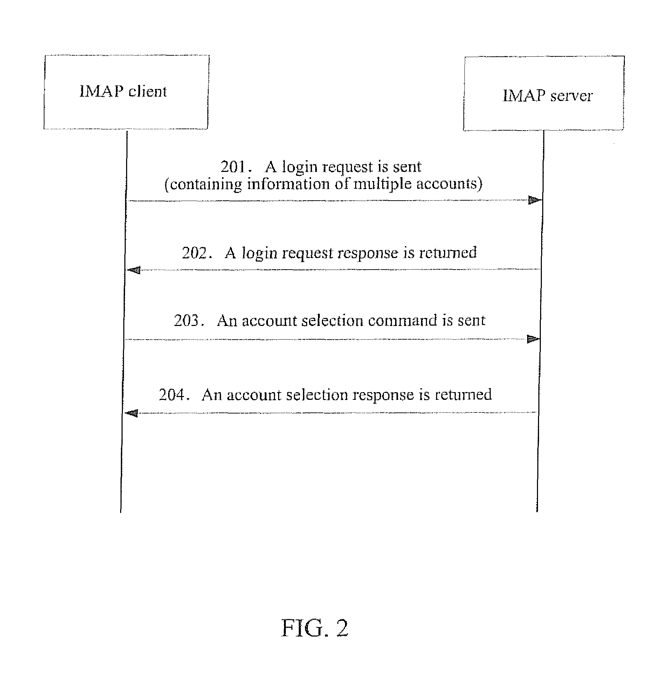

The example provides a method for multiple accounts accessing an IMAP server, and as shown in FIG. 2, an association table is not set in the example, a user uses multiple accounts to perform login once, and it is only required to establish one IMAP link between an IMAP client and the IMAP server. In step 201, the IMAP client sends a login request to the IMAP server, wherein account information of multiple accounts which are requested to be logged in is carried.

If a clear text login way is utilized to perform login, the multiple accounts can use the same password, and it is only required to input one password at this point, and the multiple accounts also can use different passwords, and it is required to input the passwords respectively with respect to the accounts with different passwords at this point.

In step 202, after receiving the login request, the IMAP server performs authentication and verification on the multiple accounts in the login request respectively.

In step 203, when it is required to perform operation on one of multiple accounts, the IMAP client sends an account selection command to the IMAP server, and the account selection command carries information of the account on which operation is required to be performed, for example, SELECT A is sent, and the A means that it is chosen to perform operation on the account A.

In step 204, the IMAP server returns an account selection response to the IMAP client, and then the operation of the IMAP client is performed on the selected account.

Therefore, the IMAP client can implement the selection and handover between the multiple accounts by extending the account selection command.

The present invention discloses that, after the extension of the account selection command SELECTA can implement the login of the IMAP client, selection operations are performed between all the accounts, thereby determining which account is the current account.

### Example 3

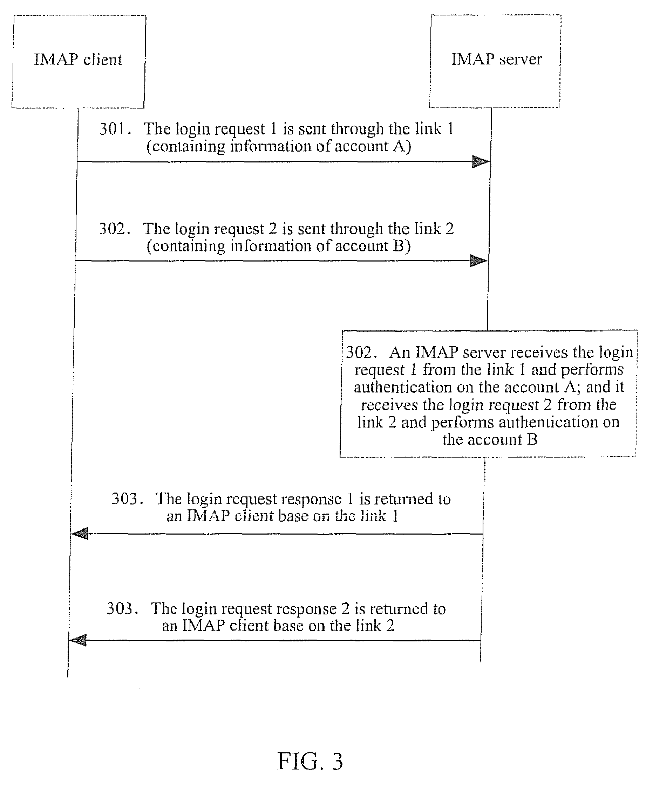

The example provides a method for multiple accounts accessing an IMAP server, and as shown in FIG. 3, multiple IMAP links are established between an IMAP client and the IMAP server in the example, and each link corresponds to one user account. In the example, it is assumed that a link between an account A and the IMAP server is the link 1 and a link between an account B and the IMAP server is the link 2.

An association table is set for one user, and a corresponding relation between the user and the multiple accounts of the user is recorded in the association table, and a login password is set for the multiple accounts in the association table; this relation only means that these multiple accounts belong to the same user and can be authenticated and used together, and it is unnecessary to use them separately.

When logging in the IMAP server, the IMAP client logs in the multiple accounts in the association table simultaneously, that is, login requests are sent to the IMAP server in the multiple links simultaneously, and as shown in FIG. 3, the following steps are included.

In step 301, the IMAP client sends the login request 1 to the IMAP server based on the established link 1, and information of the account A is carried to request logging in the account A.

The IMAP client sends the login request 2 to the IMAP server based on the established link 2, and information of the account B is carried to request logging in the account B.

In the step, since the account A and the account B are accounts in the same association table and they have the same login password, the login password can only be inputted once in the user operation interface provided by the IMAP client, and the login password is sent to the IMAP server along with the information of the account A through the link 1, and it is sent to the IMAP server along with the information of the account B through the link 2, which improves the user experience.

In step 302, after receiving the login request 1 from the link 1, the IMAP server performs verification on the account A in the login request 1.

After receiving the login request 2 from the link 2, the IMAP server performs verification on the account B in the login request 2.

In step 303, the IMAP server returns the login request response 1 to the IMAP client based on the link 1, and returns the login request response 2 to the IMAP client based on the link 2.

At this point, the IMAP client logs in the account A and the account B simultaneously, and it can perform operation on the account A based on the link 1 and perform operation on the account B based on the link 2.

It can be seen that it is not required to make modifications with respect to the IMAP protocol in the example.

### Example 4

The example provides a method for multiple accounts accessing an IMAP server, and the difference between the example and the example 1 is that an account used for performing identity authentication with a server is one special account, and this account can be associated with multiple sub-accounts, and when a user uses this special account to perform login and identity authentication, the sub-accounts authentication associated with this special account are authenticated. For example, one user sets an authenticated account A in the IMAP server and sets associated sub-accounts B, C and D, and an IMAP client uses the account A during the login (or the identity authentication), thus, after the account A passes the authentication, the sub-accounts B, C and D associated with the account A are also authenticated. In the example, it is only required to establish one IMAP link between the IMAP client and the IMAP server.

In the example, after passing the authentication, the IMAP client can perform selection operations between the sub-accounts by extending the account selection command such as the SELECTA.

The login mentioned in the present invention means the authentication processes between the IMAP client and the IMAP server, including: 1, A login process (referring to a LOGIN command interaction process) after the IMAP client and the IMAP server establish a connection without pre-authentication process; 2, An authentication process (i.e. an AUTHENTICATE command interaction process) after the IMAP client and the IMAP server establish a connection without pre-authentication process; 3, A connection process with pre-authentication process established by the IMAP client and the IMAP server.

The ordinary person skilled in the art can understand that all or part of the steps in the above method can be completed by the program instructing related hardware, and the program can be stored in a computer readable memory medium, such as a read-only memory, disk or optical disk and so on. Alternatively, all or part of the steps of the above examples also can be implemented by using one or multiple integrated circuits. Correspondingly, each module/unit in the above examples can be implemented in a form of hardware, and also can be implemented in a form of software function module. The present invention is not limited to any combination of hardware and software in a specific form.

The above description is only the preferred examples of the present invention, which is not used to limit the present invention. The present invention can have various modifications and changes for the skilled person in the art. All the modifications, equivalent substitutions, and improvements and so on made within the spirit and principle of the present invention shall fall into the protection scope of the present invention.

### Industrial Applicability

Compared with the related art, in the present invention, it can be implemented that the user uses multiple accounts (i.e. mail boxes) to access the IMAP server simultaneously, thereby improving the user experience.

## Claims

1. A method for multiple accounts accessing an Internet Message Access Protocol (IMAP) server, comprising:
an IMAP client establishing a single IMAP link between the IMAP client and the IMAP server for multiple accounts of one user; and
when logging in the IMAP server, the IMAP client sending a login request to the IMAP server based on the IMAP link, and the IMAP server completing verification of the multiple accounts after receiving the login request.

2. The method according to claim 1, further comprising:
before the IMAP client logs in the IMAP server, establishing association information containing account information of the associated multiple accounts belonging to one user; and the multiple accounts contained in the association information forming an association group;
the step of sending a login request to the IMAP server based on the IMAP link comprising: the IMAP client sending the login request to the IMAP server by using a logged-in account in the association group so as to perform login, and the login request carrying account information of the logged-in account;
the step of the IMAP server completing verification of the multiple accounts after receiving the login request comprising: after completing verification of the logged-in account, the IMAP server searching for association information according to the logged-in account, and completing verifications of other associated accounts besides the logged-in account; wherein,
the logged-in account is any account in the association group or one specific account in the association group.

3. The method according to claim 1, wherein,
the login request sent by the IMAP client to the IMAP server carries the account information of the multiple accounts; the step of the IMAP server completing verification of the multiple accounts after receiving the login request comprises: the IMAP server performing verification on the multiple accounts.

4. The method according to claim 2 or 3, further comprising:
after using the multiple accounts to log in the IMAP server, when needing to perform operation on one account in the multiple accounts, the IMAP client sending an account selection command to the IMAP server, and carrying account information of an account on which an operation is required to be performed in the account selection command; and
the IMAP server returning an account selection response after receiving the account selection command, and the IMAP client performing operation on a selected account according to the account selection response.

5. A method for multiple accounts accessing an Internet Message Access Protocol (IMAP) server, comprising:
establishing a single IMAP link for each of the multiple accounts between IMAP Client and the IMAP server respectively; and each account corresponding to one IMAP link;
when logging in the IMAP server, an IMAP client sending a login request to the IMAP server via each of the multiple IMAP links corresponding to the multiple accounts simultaneously, and the login request in each IMAP link carrying account information; and
the IMAP server receiving the login requests from the multiple links, and completing verification of the multiple accounts.

6. The method according to claim 5, further comprising:
before the IMAP client logs in the IMAP server, setting an association table for the user, the association table recording a corresponding relation between the user and the multiple accounts, and setting a login password for the multiple accounts;
when sending the login requests to the IMAP server in the multiple IMAP links, the IMAP client inputting the login password once, and the input login password being sent to the IMAP server along with the account information sent via each IMAP link.

7. A system for multiple accounts accessing an Internet Message Access Protocol (IMAP) server, comprising an IMAP client and the IMAP server; wherein,
the IMAP client is configured to: establish a single IMAP link for multiple accounts of one user along with the IMAP server; and send a login request to the IMAP server based on the established single IMAP link;
the IMAP server is configured to complete verification of the multiple accounts after receiving the login request.

8. The system according to claim 7, further comprising: a setting module, the setting module being configured to establish association information containing account information of the associated multiple accounts belonging to the user; and the multiple accounts contained in the association information forming an association group;
the IMAP client being configured to send the login request to the IMAP server in a following way: sending the login request to the IMAP server by using a logged-in account in the association group, and the login request carrying account information of the logged-in account;
the IMAP server being configured to complete the verification of the multiple accounts in a following way: completing verification of the logged-in account according to account information in the login request, and searching for association information according to the account information of the logged-in account, and completing verifications of other associated accounts besides the logged-in account; wherein
the logged-in account is any account in the association group or one specific account in the association group.

9. The system according to claim 7, wherein,
the login request sent by the IMAP client to the IMAP server carries account information of the multiple accounts;
the IMAP server is configured to complete the verification of the multiple accounts in a following way: performing verification on the multiple accounts after receiving the login request.

10. The system according to claim 8 or 9, wherein,
the IMAP client is further configured to send an account selection command to the IMAP server when performing operation on one account after using the multiple accounts to log in the IMAP server, and to carry account information of an account on which an operation is required to be performed in the account selection command, and perform operation on a selected account after receiving an account selection response;
the IMAP server is further configured to return the account selection response after receiving the account selection command.

11. A system for multiple accounts accessing an Internet Message Access Protocol (IMAP) server, comprising an IMAP client and the IMAP server; wherein,
the IMAP client is configured to establish a single IMAP link for each of multiple accounts of one user along with the IMAP server, and each account corresponds to one IMAP link;
the IMAP client is further configured to send a login request to the IMAP server via each of the multiple IMAP links simultaneously when logging in the IMAP server, and the login request in each IMAP link carries account information;
the IMAP server is configured to receive the login requests from the multiple IMAP links, and complete verification of the multiple accounts.

12. The system according to claim 11, further comprising: a setting module, the setting module being configured to: set an association table for the user, wherein the association table records a corresponding relation between the user and the multiple accounts, and the setting module being configured to: set a login password for the multiple accounts in the association table;
the IMAP client being configured to input the login password once when sending the login requests to the IMAP server, wherein the login password is sent to the IMAP server along with the account information sent via each IMAP link.
